# EUROPEAN PATENT APPLICATION

(11) **EP 4 529 133 A1**
(43) Date of publication of application: **26.03.2025**
(21) Application number: 23924929.5
(22) Date of filing: 28.09.2023
(51) Int. Cl.: H04L 67/12

(54) **VEHICLE-BASED COMMUNICATION METHOD AND APPARATUS, VEHICLE, AND STORAGE MEDIUM**

(30) Priority: 02.03.2023 CN 202310192219
(71) Applicant: Huizhou Desay SV Automotive Co., Ltd., Huizhou, Guangdong 516006 (CN)
(72) Inventor: CHEN, Jian, Huizhou, Guangdong 516006 (CN)
(74) Representative: Tiburzi, Andrea
(86) International application number: PCT/CN2023/122424
(87) International publication number: WO 2024/178975

(57) **Abstract**

A vehicle-based communication method and apparatus, a vehicle, and a storage medium are provided. The method is applied to a vehicle, the vehicle includes a sending end and a receiving end of messages, and the method includes the steps that the sending end determines message information containing multiple pieces of semaphore information; the sending end determines a length of placeholder data of a semaphore and a bit field data structure containing the placeholder data according to the message information and the preset message data length, where the length of the placeholder data is determined according to the start position and the data length of a respective semaphore; and the sending end packs multiple semaphores based on the bit field data structure to obtain a target message, and sends the target message to the receiving end. The acquired semaphore data can be directly packed into the message, and the steps of masking, shifting and the like in the message packing process are omitted by utilizing the placeholder data.

## Description

This application claims priority to Chinese Patent Application No. 202310192219.5 filed with the China National Intellectual Property Administration (CNIPA) on Mar. 2, 2023, the disclosure of which is incorporated herein by reference in its entirety.

### TECHNICAL FIELD

The present application relates to the field of communication technology, and for example, a vehicle-based communication method and apparatus, a vehicle, and a storage medium.

### BACKGROUND

With the continuous development of information technology, an on-board communication system in a vehicle can solve the communication problems encountered in driving, making driving safer and more convenient. Based on the development of intelligent transportation systems and sensor network technologies, in-vehicle communication systems can achieve highly information-based and intelligent transportation.

Currently, communication of the in-vehicle communication system is generally carried out in the form of controller area network (CAN) messages. Before transmitting data to a receiving end such as an in-vehicle controller, during packing and unpacking of messages, it is generally necessary to perform bit processing such as masking and shifting on semaphores in each message.

However, every time the semaphores change, a relevant function is called to update the semaphores in the entire message. This data processing method not only makes the code cumbersome but also reduces the operating efficiency of the entire vehicle communication system.

### SUMMARY

The present application provides a vehicle-based communication method and apparatus, a vehicle, and a storage medium to solve the problem of cumbersome data processing during vehicle communication.

In a first aspect, the present application provides a vehicle-based communication method applied in a vehicle, the vehicle includes a sending end and a receiving end of a message, and the method includes as follows.

The sending end determines message information containing multiple pieces of semaphore information, where a piece of semaphore information includes a start position of data of a semaphore, a signal identifier of the semaphore, and a data length of the semaphore, and the start position is determined based on a preset message data length.

The sending end determines a length of placeholder data of a semaphore and a bit field data structure containing the placeholder data according to the message information and the preset message data length, where the length of the placeholder data is determined according to the start position and the data length of the semaphore.

The sending end packs multiple semaphores based on the bit field data structure to obtain a target message, and sends the target message to the receiving end.

In a second aspect, the present application provides a vehicle-based communication apparatus configured in a vehicle, the vehicle includes a sending end and a receiving end of a message, and the apparatus includes a message information determination module, a result determination module and a message sending module.

The message information determination module belongs to the sending end and is configured to determine message information containing multiple pieces of semaphore information, where a piece of semaphore information includes a start position of data of a semaphore, a signal identifier of the semaphore, and a data length of the semaphore, and the start position is determined based on a preset message data length.

The result determination module belongs to the sending end and is configured to determine a length of placeholder data of a semaphore and a bit field data structure containing the placeholder data according to the message information and the preset message data length, where the length of the placeholder data is determined according to the start position and the data length of the semaphore.

The message sending module belongs to the sending end and is configured to pack the multiple semaphores based on the bit field data structure to obtain a target message, and send the target message to the receiving end.

In a third aspect, a vehicle is provided according to the present application, the vehicle includes at least one processor and a memory communicatively connected to the at least one processor.

The memory stores a computer program executable by the at least one processor, and the computer program, when being executed by the at least one processor, causes the at least one processor to perform the vehicle-based communication method in the above first aspect.

In a fourth aspect, the present application provides a computer-readable storage medium storing a computer instruction. The computer instruction is configured to cause a processor to implement the vehicle-based communication method in the above first aspect when the computer instruction is executed by the processor.

In the vehicle-based communication solution according to the present application, a sending end determines message information containing multiple pieces of semaphore information, where a piece of semaphore information includes a start position of data of a semaphore, a signal identifier of the semaphore, and a data length of the semaphore, and the start position is determined based on a preset message data length. The sending end determines a length of placeholder data of a semaphore and a bit field data structure containing the placeholder data according to the message information and the preset message data length, where the length of the placeholder data is determined according to the start position and the data length of the semaphore. The sending end packs multiple semaphores based on the bit field data structure to obtain a target message, and sends the target message to the receiving end. With the technical solution described above, the sending end in the vehicle determines the length of the placeholder data of each semaphore and the bit field data structure containing the placeholder data according to the message information and the preset message data length, and a data architecture (bit field data structure) consistent with the message structure is defined. The data structure can be used to directly pack the collected semaphore data into a message. By utilizing the placeholder data, steps such as masking and shifting in the message packing process are omitted, thereby solving the problem that each time the semaphore data changes, a related function is called to update the semaphores in the entire message due to mismatch between the data length of the semaphore and the preset message data length.

### BRIEF DESCRIPTION OF DRAWINGS

FIG. 1 is a flow chart of a vehicle-based communication method provided according to embodiment one of the present application;
FIG. 2 is a flow chart of a vehicle-based communication method provided according to embodiment two of the present application;
FIG. 3 is a schematic diagram of the structure of a vehicle-based communication apparatus provided according to embodiment three of the present application; and
FIG. 4 is a schematic diagram of the structure of a vehicle provided according to embodiment four of the present application.

### DETAILED DESCRIPTION

It should be noted that the terms "first", "second", etc. in the specification and claims of the present application and the above-mentioned drawings are intended to distinguish similar objects, and are not necessarily used to describe a specific order or sequence. It is to be understood that the terms so used are interchangeable under appropriate circumstances such that the embodiments of the application described herein are capable of being practiced in sequences other than those illustrated or described herein. In the description of the present application, unless otherwise specified, "multiple/plurality" means two or more. "And/or" describes the association relationships of associated objects, indicating that three relationships can exist. For example, A and/or B can mean: A exists alone, A and B both exist, and B exists alone. The character "/" generally indicates that the previous and next associated objects are in an "or" relationship. Furthermore, the terms "comprise/include", and "have", and any variations thereof, are intended to cover non-exclusive inclusions. For example, a process, method, system, product or apparatus that includes a series of steps or elements is not necessarily limited to those steps or elements explicitly listed, but may include other steps or elements not explicitly listed or inherent to such process, method, product or apparatus.

### Embodiment one

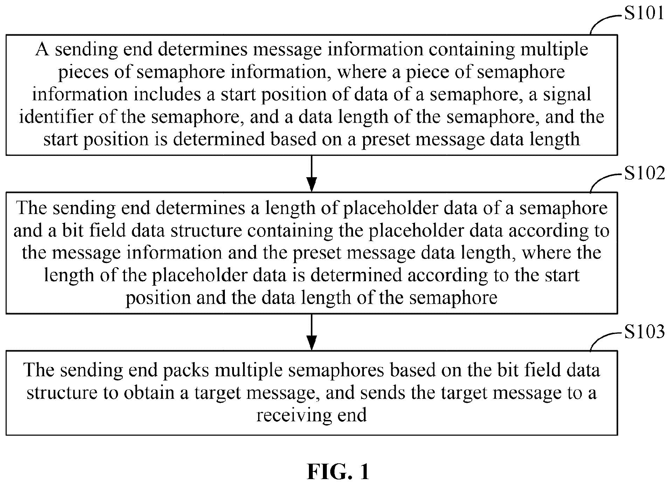

FIG. 1 is a flow chart of a vehicle-based communication method according to embodiment one of the present application. This embodiment is applicable to situations where communication is performed inside a vehicle. The method may be performed by a vehicle-based communication apparatus. The vehicle-based communication apparatus may be implemented in the form of hardware and/or software. The vehicle-based communication apparatus can be configured in a vehicle, such as a vehicle computer. The vehicle includes a sending end and a receiving end of a message. The vehicle computer and other devices (such as a controller) inside the vehicle may all be sending ends and receiving ends. The vehicle may be composed of two or more physical entities.

As shown in FIG. 1, a vehicle-based communication method according to embodiment one of the present application includes the following steps.

In S101, a sending end determines message information containing multiple pieces of semaphore information, where a piece of semaphore information includes a start position of data of a respective semaphore, a signal identifier of the respective semaphore, and a data length of the respective semaphore, and the start position is determined based on a preset message data length.

In this embodiment, when communication is performed inside the vehicle, the same device may be both a sending end and a receiving end. For example, when the vehicle computer sends a message, the vehicle computer is a sending end, and when the vehicle computer receives a message, the vehicle computer is a receiving end. The message information may be in the form of the message information table shown in Table 1 below:

**Table 1 Message information table**

| | Name | Bitpos | Length |
|---|---|---|---|
| 1 | BCS_9_A_Checksum | 56 | 8 |
| 2 | BCS_9_A_MsgCounter | 48 | 4 |
| 3 | BCS_FRWheelRotatedDirectionAPA | 46 | 2 |
| 4 | BCS_FLWheelRotatedDirectionAPA | 44 | 2 |
| 5 | BCS _FRWheelSpd | 32 | 13 |
| 6 | BCS _FRWheelSpdVD | 31 | 1 |
| 7 | BCS_FRWheelRotatedDirectionVD | 29 | 1 |
| 8 | BCS_FLWheelSpd | 16 | 13 |
| 9 | BCS_FLWheelRotatedDirectionVD | 7 | 1 |
| 10 | BCS_FLWheelSpdVD | 5 | 1 |

The sending end of a message may determine the information about a to-be-sent message, that is, the message information containing multiple pieces of semaphore information, according to data collected by sensors or the message received. As shown in Table 1, the column where Name is located in Table 1 is the signal identifiers of the semaphores, the column where Bitpos is located is the start positions, and the column where Length is located is the data lengths. The semaphores may include the wheel speed, the door status, the light status, the tire pressure, etc. The start position of data of a semaphore can be understood as the position of the first bit occupied by the data of the semaphore in a preset bit field corresponding to the preset message data length, for example, the preset bit field is 0 to 63 bits, the position of the first bit is at the fifth bit, and the fifth bit is the start position. The preset message data length may be understood as the length corresponding to the preset bit field. If the preset bit field is 0 to 63 bits, the preset message data length is eight bytes (each byte has eight bits). The preset bit field may be understood as the total bit field of data of all semaphores in the message information.

In S102, the sending end determines a length of placeholder data of a semaphore and a bit field data structure containing the placeholder data according to the message information and the preset message data length, where the length of the placeholder data is determined according to the start position and the data length of the semaphore.

In this embodiment, the sending end may determine the length of the placeholder data of the semaphore according to the message information and the preset message data length. If the preset message data length is eight bytes, the preset bit field may be set to 0 to 63 bits. If among the multiple pieces of semaphore information contained in the message information, a sum of the data length of a certain semaphore and the start position of the certain semaphore corresponds to the sixth bit in the preset bit field, while an end position of the semaphore at a sub-bit field corresponding to the semaphore in the preset bit field is the eighth bit, then the difference of 2 between the two positions may be used as the length of the placeholder data, and the length of the placeholder data of each semaphore may be determined accordingly. The difference between these two positions indicates that the data of the semaphore cannot fill up the corresponding sub-bit field, that is, there is an empty bit. Then, according to the message information and the length of the placeholder data, the bit field data structure containing the placeholder data of each semaphore may be determined. For example, the signal identifiers in the message information may be used as identifiers of variables in the bit field data structure. The preset bit field may be divided into multiple sub-bit fields, the number of sub-bit fields may be consistent with the number of semaphores, and the preset bit field and the sub-bit fields may be pre-set according to the communication protocol and the preset message data length. The placeholder data may be empty data with no content.

In S103, the sending end packs multiple semaphores based on the bit field data structure to obtain a target message, and sends the target message to the receiving end.

In this embodiment, the sending end may pack the data in the semaphores to obtain the (target) message, and send the message to the receiving end, thereby realizing communication between the receiving end and the sending end. Since placeholder data exists in the bit field data structure, and the placeholder data can fill up the empty bits in the sub-bit fields corresponding to the semaphore data, there is no need for operations such as shifting and masking during the packing process. The packing method can be directly assigning the data in the semaphores to the variables in the bit field data structure.

In the vehicle-based communication method according to the embodiment of the present application, a sending end determines message information containing multiple pieces of semaphore information, where a piece of semaphore information includes a start position of data of a semaphore, a signal identifier of the semaphore, and a data length of the semaphore, and the start position is determined based on a preset message data length. The sending end determines a length of placeholder data of a semaphore and a bit field data structure containing the placeholder data according to the message information and the preset message data length, where the length of the placeholder data is determined according to the start position and the data length of the semaphore. The sending end packs multiple semaphores based on the bit field data structure to obtain a target message, and sends the target message to the receiving end. According to the technical solution of the embodiment of the present application, the sending end in the vehicle determines the length of the placeholder data of the semaphore and the bit field data structure containing the placeholder data according to the message information and the preset message data length, and a data architecture (bit field data structure) consistent with the message structure is defined. The data structure can be used to directly pack the collected semaphore data into a message. By utilizing the placeholder data, steps such as masking and shifting in the message packing process are omitted, thereby solving the problem that each time the semaphore data changes, a related function is called to update the semaphores in the entire message due to the mismatch between the data length of the semaphore and the preset message data length.

### Embodiment two

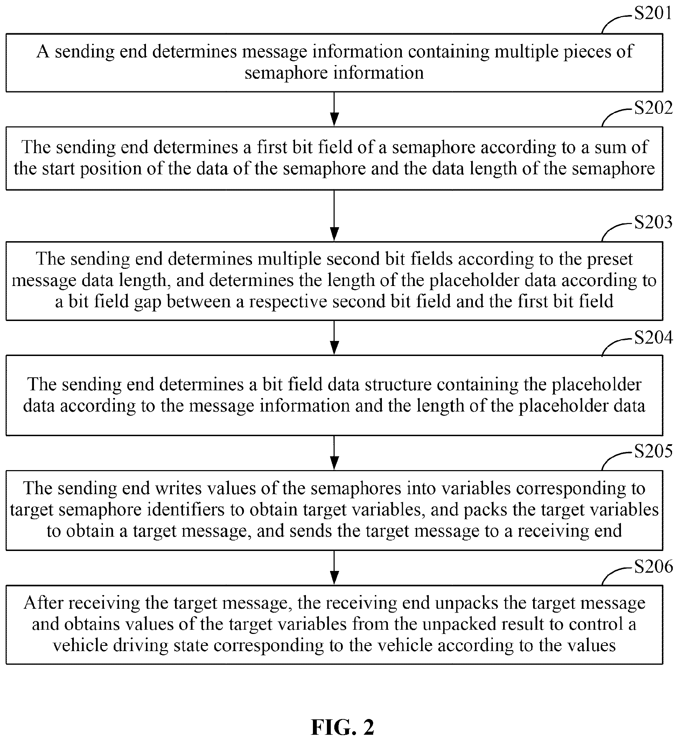

FIG. 2 is a flow chart of a vehicle-based communication method provided in a second embodiment of the present application. The technical solution of the embodiment of the present application is further detailed on the basis of the above-mentioned optional technical solutions, and a method for communication inside a vehicle is provided.

Optionally, the step in which the sending end determines the length of placeholder data of a semaphore and the bit field data structure containing the placeholder data according to the message information and the preset message data length includes the following. The sending end determines a first bit field of the semaphore according to a sum of the start position of the data of the semaphore and the data length of the semaphore, where a start position of the first bit field is the start position of the data of the semaphore, and an end position of the first bit field is a position corresponding to the sum; the sending end determines multiple second bit fields according to the preset message data length, and determines the length of the placeholder data according to a bit field gap between a respective second bit field and the first bit field, where the sum of the length of the placeholder data and the data length of the semaphore is consistent with the length corresponding to the second bit field of the semaphore; and the sending end determines the bit field data structure containing the placeholder data according to the message information and the length of the placeholder data. The advantage of this setting is that the length of the placeholder data can be accurately determined by using the bit field gap, thereby ensuring the accuracy of communication between the receiving end and the sending end.

Optionally, the step in which the sending end packs the multiple semaphores based on the bit field data structure to obtain the target message includes the following. The sending end writes values of the semaphores into variables corresponding to target semaphore identifiers to obtain target variables, and packs the target variables to obtain the target message, where the bit field data structure also includes the target semaphore identifiers, and the target semaphore identifiers are consistent with the signal identifiers of the semaphores. The advantage of this setting is that by writing the values of the semaphores into the variables corresponding to the target semaphore identifiers, the message can be packed without calling the encoding function.

Optionally, after the sending end sends the target message to the receiving end, the method further includes the following: after receiving the target message, the receiving end unpacks the target message and obtains values of the target variables from the unpacking result to control the vehicle driving status corresponding to the vehicle according to the values. The advantage of this setting is that the receiving end can unpack the message without calling the decoding function, making access to the semaphores direct.

As shown in FIG. 2, a vehicle-based communication method according to embodiment two of the present application includes the following steps.

In S201, the sending end determines message information containing multiple pieces of semaphore information.

In S202, the sending end determines a first bit field of a semaphore according to a sum of the start position of the data of the semaphore and the data length of the semaphore.

A start position of the first bit field is the start position of the data of the semaphore, and an end position of the first bit field is a position corresponding to the sum.

For example, if the start position of the data of a semaphore is the seventh bit and the data length of the semaphore is five bits, the sum of these two is twelve, and the first bit field corresponding to the semaphore is the seventh bit to the eleventh bit.

In S203, the sending end determines multiple second bit fields according to the preset message data length, and determines the length of the placeholder data according to a bit field gap between a second bit field and the first bit field.

The sum of the length of the placeholder data and the data length of the semaphore is consistent with the length corresponding to the second bit field.

As described above, the preset bit field and the sub-bit fields in the preset bit field may be determined according to the preset message data length and the number of semaphores, and the sub-bit fields are the second bit fields.

For example, if the preset message data length is 3 bytes, the preset bit field is 0 to 23 bits, the number of semaphores is four, the four second bit fields are 0 to 6^{th} bits, 7^{th} to 12^{th} bits, 13^{th} to 20^{th} bits, and 21^{th} to 23^{th} bits respectively, and the first bit fields are 0 to 6^{th} bits, 7^{th} to 11^{th} bits, 13^{th} to 20^{th} bits, and 21^{th} to 23^{th} bits respectively. Therefore, a bit field gap exists between the second bit field (7^{th} to 12^{th} bits) and the first bit field (7^{th} to 11^{th} bits), and the length difference corresponding to the bit field gap is 1, then the difference 1 can be used as the length of the placeholder data.

In S204, the sending end determines a bit field data structure containing the placeholder data according to the message information and the length of the placeholder data.

In addition to the placeholder data, the bit field data structure may further include some information in the message information, for example, the signal identifiers of the semaphores and the data lengths of the semaphores.

Optionally, the bit field data structure at least includes target semaphore identifiers, target data lengths and the placeholder data. The step in which the sending end determines the bit field data structure containing the placeholder data according to the message information and the length of the placeholder data includes as follows. The sending end determines the signal identifiers of the semaphores as the target semaphore identifiers and the data lengths of the semaphores as the target data lengths; and the sending end determines the bit field data structure containing the placeholder data according to the bit field gap and the length of the placeholder data. The advantage of this setting is that it makes the reading of semaphore data more intuitive, the code more concise and more readable.

Different bit field gaps correspond to different lengths of placeholder data, and thus the corresponding bit field data structures are also different. Therefore, the bit field data structure may be defined according to the size of the bit field gap and the length of the placeholder data. If there is no gap between the first bit field and the second bit field corresponding to a semaphore, that is, the bit field gap is empty, the length of the placeholder data in the bit field data structure is zero.

For example, if the signal identifier of a semaphore is BCS_9_A_Checksum, the signal identifier may be determined as the target semaphore identifier in the bit field data structure; and if the data length of the signal identifier is 8 bits, the data length may be determined as the target data length in the bit field data structure.

Further, the step in which the sending end determines the bit field data structure containing the placeholder data according to the bit field gap and the length of the placeholder data includes as follows. In response to the bit field gap being a non-empty gap, the sending end determines the length of the placeholder data corresponding to the non-empty gap as a target placeholder length of the semaphore corresponding to the bit field gap, where a type of the bit field gap includes an empty gap and the non-empty gap, the empty gap indicates that the second bit field is consistent with the first bit field, and the length of the placeholder data corresponding to the empty gap is zero; and the sending end determines a placeholder position of the placeholder data in the bit field data structure and the bit field data structure containing the placeholder data according to the non-empty gap and the target placeholder length. The advantage of this setting is that the bit field data structure and the placeholder position of the placeholder data in the bit field data structure are accurately determined, thereby ensuring the reliability of communication.

For example, according to the message information shown in Table 1, the bit field data structure may be represented in code form as follows:

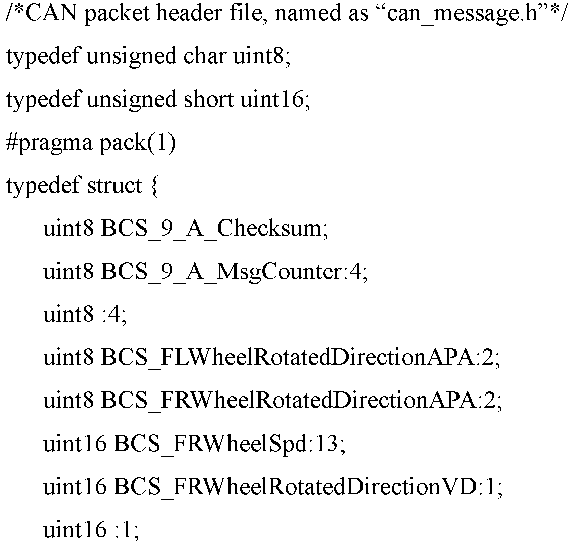

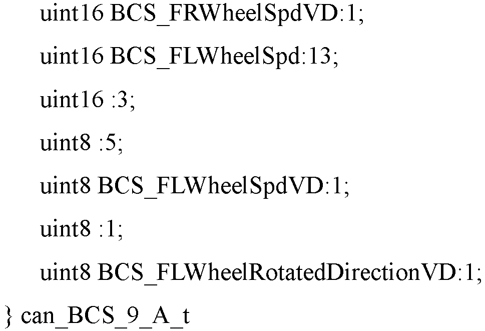

The data between target semaphore identifiers is the placeholder data, such as uint8 :4 between BCS_9_A_MsgCounter and BCS_FLWheelRotatedDirectionAPA, which represents 4-bit placeholder data. The length of the placeholder data of the semaphore with an empty gap is zero, such as the semaphore corresponding to BCS_9_A_Checksum, so no placeholder data exists between BCS_9_A_Checksum and BCS_9_A_MsgCounter (the length of the placeholder data is zero). The number after the target semaphore identifier represents the target data length, such as BCS_9_A_MsgCounter:4 represents that the data length of the semaphore corresponding to BCS_9_A_MsgCounter is 4 bits, occupying 4 bits.

In S205, the sending end writes values of the semaphores into variables corresponding to the target semaphore identifiers to obtain target variables, and packs the target variables to obtain a target message, and sends the target message to the receiving end.

The bit field data structure further includes the target semaphore identifiers, and the target semaphore identifiers are consistent with the signal identifiers of the semaphores.

Exemplarily, the process of packing the target variables may be represented in the code form, for example: 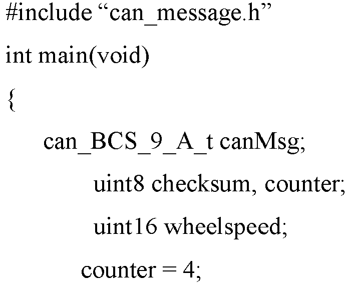 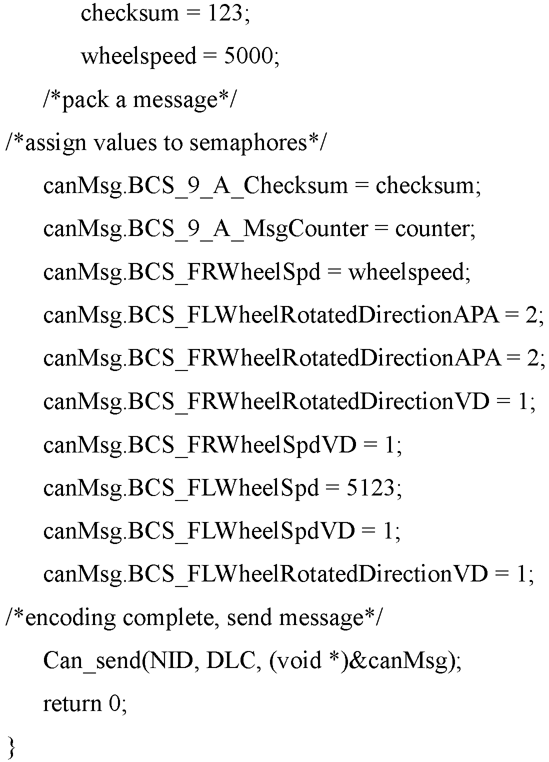 can _message.h is the name of the bit field data structure, and the content between /*assign values to semaphores*/ and /*encoding complete, send message*/ is the process of writing the values of the semaphored into the variables corresponding to the target semaphore identifiers.

In S206, after receiving the target message, the receiving end unpacks the target message and obtains values of the target variables from the unpacked result to control the vehicle driving state corresponding to the vehicle according to the values.

After receiving the target message, the receiving end does not need to perform operations such as shifting and masking on the target message, and can directly read the values of the target variables, that is, the values of the semaphores, from the target message.

Exemplarily, the process of unpacking the target variables may be represented in the code form, for example:

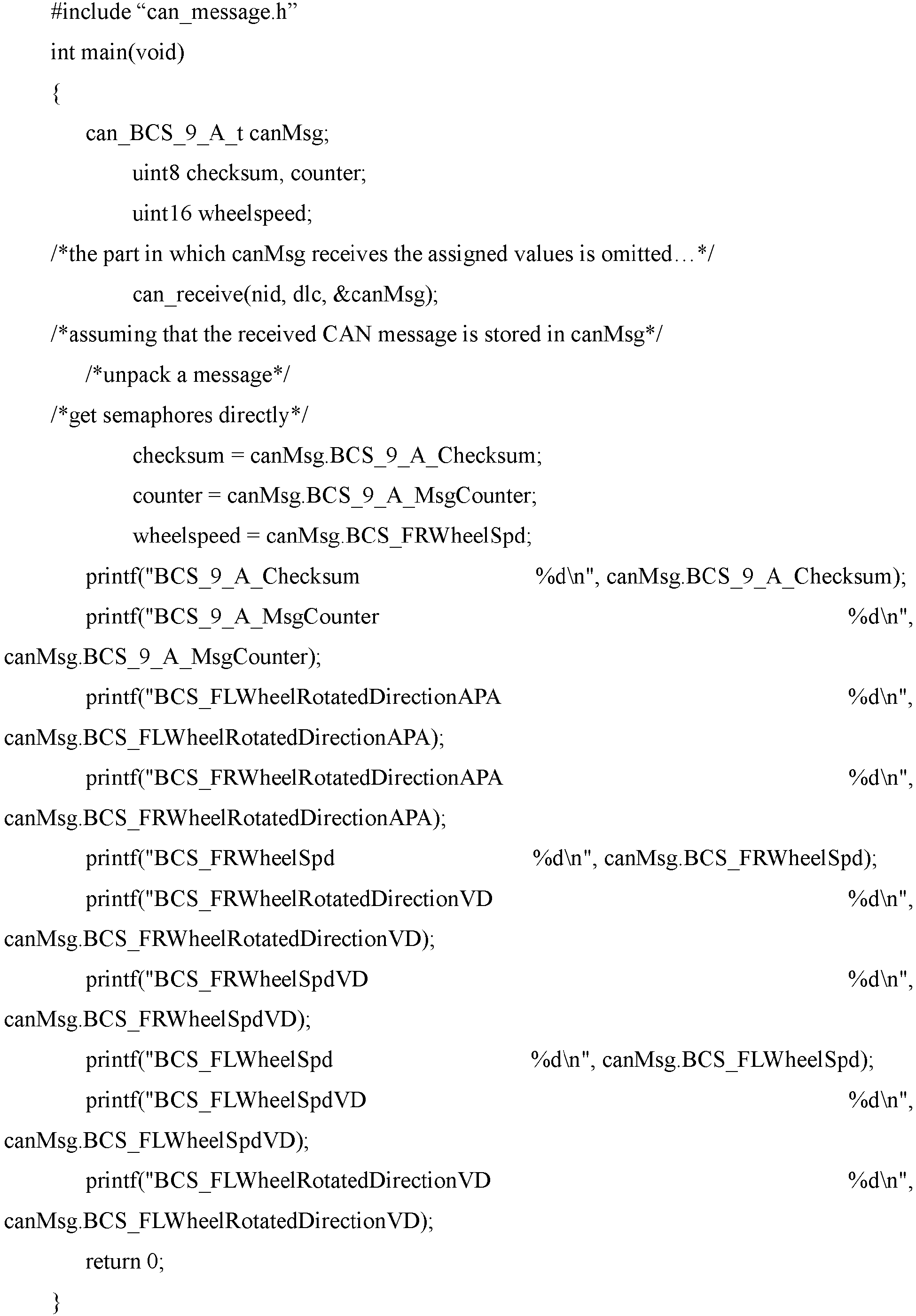

The content below /*get semaphores directly*/ is the process of getting the values of the target variables from the unpacked result.

Optionally, the bit field data structure is determined based on C or C++ programming language. The advantage of this setting is that it supports different forms of CAN messages and improves the compatibility of the vehicle communication system.

There is the concept of bit field in C or C++ programming language, so the bit field data structure can be written by C or C++ programming language.

In the vehicle-based communication method according to the embodiment of the present application, the sending end in the vehicle first accurately determines the length of the placeholder data in the bit field data structure according to the start position and data length of each semaphore in the message information, thus ensuring the accuracy of communication between the receiving end and the sending end, then writes the values of the semaphores into the variables corresponding to the target semaphore identifiers, thus realizing the packing of the message without operations of calling the encoding function and the like, and sending the message to the receiving end. The receiving end can unpack the message without calling the decoding function so that the access to the semaphores becomes direct, and the codes become concise, which improves the readability of the codes, saves system resources, and improves the operating efficiency of the entire in-vehicle communication system. The method can also be extended to any scenario in which compact coded data messages with bits as the basic unit are used for communication.

### Embodiment three

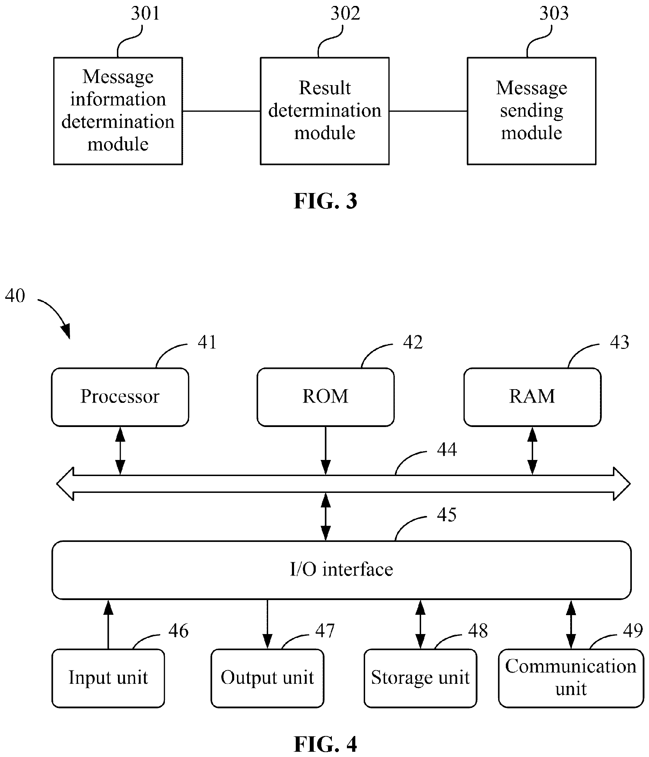

FIG. 3 is a schematic diagram of the structure of a vehicle-based communication apparatus provided according to embodiment three of the present application. The apparatus may be configured in a vehicle including a sending end and a receiving end of a message. As shown in FIG. 3, the apparatus includes a message information determination module 301, a result determination module 302 and a message sending module 303.

The message information determination module belongs to the sending end and is configured to determine message information containing multiple pieces of semaphore information, where a piece of semaphore information includes a start position of data of a semaphore, a signal identifier of the semaphore, and a data length of the semaphore, and the start position is determined based on a preset message data length.

The result determination module belongs to the sending end and is configured to determine a length of placeholder data of a semaphore and a bit field data structure containing the placeholder data according to the message information and the preset message data length, where the length of the placeholder data is determined according to the start position and the data length of a respective semaphore.

The message sending module belongs to the sending end and is configured to pack multiple semaphores based on the bit field data structure to obtain a target message, and send the target message to the receiving end.

With the vehicle-based communication apparatus according to the embodiment of the present application, the sending end in the vehicle determines the length of the placeholder data of each semaphore and the bit field data structure containing the placeholder data according to the message information and the preset message data length, and a data architecture (bit field data structure) consistent with the message structure is defined. The data structure can be used to directly pack the collected semaphore data into a message. By utilizing the placeholder data, steps such as masking and shifting in the message packing process are omitted, thereby solving the problem that each time the semaphore data changes, a related function is called to update the semaphores in the entire message due to the mismatch between the data length of the semaphore and the preset message data length.

Optionally, the result determination module includes a bit field determination unit, a length determination unit and a data structure determination unit.

The bit field determination unit belongs to the sending end and is configured to determine a first bit field of a semaphore according to a sum of the start position of the data of the semaphore and the data length of the semaphore, where a start position of the first bit field is the start position of the data of the semaphore, and an end position of the first bit field is a position corresponding to the sum.

The length determination unit belongs to the sending end and is configured to determine multiple second bit fields according to the preset message data length, and determine the length of the placeholder data according to a bit field gap between a respective second bit field of the second bit fields and the first bit field, where a sum of the length of the placeholder data and the data length of the semaphore is consistent with a length corresponding to the second bit field of the semaphore.

The data structure determination unit belongs to the sending end and is configured to determine the bit field data structure containing the placeholder data according to the message information and the length of the placeholder data.

Optionally, the bit field data structure at least includes target semaphore identifiers, target data lengths, and the placeholder data, and the sending end determines the bit field data structure containing the placeholder data according to the message information and the length of the placeholder data in the following manner: the sending end determines signal identifiers of the semaphores as the target semaphore identifiers, determines data lengths of the semaphores as the target data lengths; and determines the bit field data structure containing the placeholder data according to the bit field gap and the length of the placeholder data.

Further, the sending end determines the bit field data structure containing the placeholder data according to the bit field gap and the length of the placeholder data in the following manner: in response to the bit field gap being a non-empty gap, the sending end determines the length of the placeholder data corresponding to the non-empty gap as a target placeholder length of the semaphore corresponding to the bit field gap, where a type of the bit field gap includes an empty gap and the non-empty gap, the empty gap indicates that the second bit field is consistent with the first bit field, and the length of the placeholder data corresponding to the empty gap is zero; and the sending end determines a placeholder position of the placeholder data in the bit field data structure and the bit field data structure containing the placeholder data according to the non-empty gap and the target placeholder length.

Optionally, the message sending module is configured to write values of the semaphores into variables corresponding to the target semaphore identifiers to obtain target variables, and pack the target variables to obtain the target message, where the bit field data structure further includes the target semaphore identifiers, and the target semaphore identifiers are consistent with the signal identifiers of the semaphores.

Optionally, the apparatus further includes a target variable value determination module.

The target variable value determination module belongs to the receiving end and is configured to, after receiving the target message, unpack the target message and obtain values of the target variables from the unpacked result to control a vehicle driving state corresponding to the vehicle according to the values.

Optionally, the bit field data structure is determined based on C or C++ programming language.

The vehicle-based communication apparatus according to the embodiment of the present application can execute the vehicle-based communication method according to any embodiment of the present application, and has the corresponding functional modules for performing the method that can achieve beneficial effects from performing the method.

### Embodiment four

FIG. 4 shows a schematic structural diagram of a vehicle 40 that may be used to implement embodiments of the present application. The components shown herein, their connections and relationships and their functions are intended to be illustrative only rather than being intended to limit implementations of the present application described and/or claimed herein.

The vehicle 40 includes a sending end and a receiving end of messages, and the sending end and the receiving end may both be a vehicle computer and other devices (such as a controller) inside the vehicle. As shown in FIG. 4, the vehicle 40 includes at least one processor 41, and a memory communicatively connected to the at least one processor 41, such as a read-only memory (ROM) 42, and a random access memory (RAM) 43. The memory stores a computer program that can be executed by the at least one processor, and the processor 41 can perform various appropriate actions and processes according to the computer program stored in the ROM 42 or the computer program loaded from the storage unit 48 to the RAM 43. In the RAM 43, various programs and data necessary for the operation of the vehicle 40 may also be stored. The processor 41, the ROM 42, and the RAM 43 are connected to one another via a bus 44. An input/output (I/O) interface 45 is also connected to the bus 44.

Multiple components in the vehicle 40 are connected to the I/O interface 45 and include the following: an input unit 46 such as a keyboard or a mouse; an output unit 47 such as various types of displays, or a speaker; a storage unit 48 such as a disk or an optical disk; and a communication unit 49 such as a network card, a modem, or a wireless communication transceiver. The communication unit 49 allows the vehicle 40 to exchange information/data with other devices through a computer network such as the Internet and/or various telecommunication networks.

The processor 41 may be a variety of general and/or special purpose processing components having processing and computing capabilities. Some examples of the processor 41 include, but are not limited to, a central processing unit (CPU), a graphics processing unit (GPU), various dedicated artificial intelligence (AI) computing chips, various processors running machine learning model algorithms, a digital signal processor (DSP), any appropriate processor, controller, microcontroller, etc. The processor 41 executes the various methods and processes described above, such as the vehicle-based communication methods.

In some embodiments, the vehicle-based communication method may be implemented as a computer program tangibly embodied in a computer-readable storage medium, such as storage unit 48. In some embodiments, part or all of the computer program may be loaded and/or installed onto the vehicle 40 via the ROM 42 and/or the communication unit 49. When the computer program is loaded into the RAM 43 and executed by the processor 41, one or more steps of the vehicle-based communication method described above may be performed. Alternatively, in other embodiments, the processor 41 may be configured to perform the vehicle-based communication method in any other suitable manner (for example, via firmware).

Various embodiments of the systems and techniques described above herein can be implemented in digital electronic circuit systems, integrated circuit systems, field programmable gate arrays (FPGAs), application specific integrated circuits (ASICs), application specific standard products (ASSPs), systems on chips (SOCs), load programmable logic devices (CPLDs), computer hardware, firmware, software, and/or combinations thereof. These various embodiments may include being implemented in one or more computer programs that can be executed and/or interpreted on a programmable system including at least one programmable processor, the programmable processor can be a special purpose or general purpose programmable processor that can receive data and instructions from a storage system, at least one input apparatus, and at least one output apparatus, and transmit data and instructions to the storage system, the at least one input apparatus, and the at least one output apparatus.

The computer program for implementing the method of the present application may be written in any combination of one or more programming languages. These computer programs may be provided to a processor of a general-purpose computer, a special-purpose computer or other programmable data processing apparatus, so that when the computer program is executed by the processor, the functions/operations specified in the flowcharts and/or block diagrams are implemented. The computer program may be executed entirely on the machine, partly on the machine, or as a stand-alone software pack partly on the machine and partly on a remote machine or entirely on the remote machine or server.

The computer device provided above can be used to perform the vehicle-based communication method provided in any of the above embodiments, and has corresponding functions and beneficial effects.

### Embodiment five

In the context of the present application, a computer-readable storage medium may be a tangible medium. The computer-executable instruction is configured to perform a vehicle-based communication method when being executed by a computer processor, the method is applied in a vehicle, and the vehicle includes a sending end and a receiving end of a message. The method includes the following.

The sending end determines message information containing multiple pieces of semaphore information, where a piece of semaphore information includes a start position of data of a semaphore, a signal identifier of the semaphore, and a data length of the semaphore, and the start position is determined based on a preset message data length.

The sending end determines a length of placeholder data of a semaphore and a bit field data structure containing the placeholder data according to the message information and the preset message data length, where the length of the placeholder data is determined according to the start position and the data length of a respective semaphore.

The sending end packs multiple semaphores based on the bit field data structure to obtain a target message, and sends the target message to the receiving end.

In the context of the present application, a computer-readable storage medium may be a tangible medium that can contain or store a computer program for use in connection with an instruction execution system, apparatus, or device. A computer-readable storage medium may include, but is not limited to, an electronic, magnetic, optical, electromagnetic, infrared, or semiconductor system, apparatus, or device, or any suitable combination of the foregoing. Alternatively, the computer-readable storage medium may be a machine readable signal medium. More specific examples of machine-readable storage media would include electrical connections based on one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing.

The computer device provided above can be used to execute the vehicle-based communication method provided in any of the above embodiments, has corresponding functions and can achieve corresponding beneficial effects.

It is worth noting that in the above-described embodiment of the vehicle-based communication apparatus, the various units and modules included are only divided according to functional logic, but are not limited to the above-mentioned division, as long as the corresponding functions can be achieved; in addition, the specific names of the functional units are only for the convenience of distinguishing each other, and are not intended to limit the scope of protection of the present application.

Please note that the above are only optional embodiments of the present application and the technical principles used. The person skilled in the art will appreciate that the present application is not limited to the specific embodiments described herein, and that various obvious changes, rearrangements, and substitutions are possible to the person skilled in the art without departing from the scope of protection of the present application. Therefore, although the present application has been described in detail through the above embodiments, the present application is not limited to the above embodiments, and may include more other equivalent embodiments without departing from the concept of the present application. The scope of the present application is defined by the scope of the attached claims.

## Claims

1. A vehicle-based communication method, applied in a vehicle, wherein the vehicle comprises a sending end and a receiving end of a message, and the method comprises:
determining, by the sending end, message information containing a plurality of pieces of semaphore information, wherein a piece of semaphore information among the plurality of pieces of semaphore information comprises a start position of data of a respective semaphore, a signal identifier of the respective semaphore, and a data length of the respective semaphore, and the start position is determined based on a preset message data length;
determining, by the sending end, a length of placeholder data of a semaphore among a plurality of semaphores and a bit field data structure containing the placeholder data according to the message information and the preset message data length, wherein the length of the placeholder data is determined according to the start position and the data length of a respective semaphore; and
packing, by the sending end, the plurality of semaphores based on the bit field data structure to obtain a target message, and sending the target message to the receiving end.

2. The method of claim 1, wherein determining, by the sending end, the length of the placeholder data of the semaphore among the plurality of semaphores and the bit field data structure containing the placeholder data according to the message information and the preset message data length comprises:
determining, by the sending end, a first bit field of the semaphore according to a sum of a start position of data of the semaphore and a data length of the semaphore, wherein a start position of the first bit field is the start position of the data of the semaphore, and an end position of the first bit field is a position corresponding to the sum;
determining, by the sending end, a plurality of second bit fields according to the preset message data length, and determining the length of the placeholder data according to a bit field gap between a respective second bit field of the plurality of second bit fields and the first bit field, wherein a sum of the length of the placeholder data and the data length of the semaphore is consistent with a length corresponding to the second bit field; and
determining, by the sending end, the bit field data structure containing the placeholder data according to the message information and the length of the placeholder data.

3. The method of claim 2, wherein the bit field data structure at least comprises a target semaphore identifier, a target data length, and the placeholder data, and determining, by the sending end, the bit field data structure containing the placeholder data according to the message information and the length of the placeholder data comprises:
determining, by the sending end, the signal identifier of the semaphore as the target semaphore identifier, and determining the data length of the semaphore as the target data length; and
determining, by the sending end, the bit field data structure containing the placeholder data according to the bit field gap and the length of the placeholder data.

4. The method of claim 3, wherein determining, by the sending end, the bit field data structure containing the placeholder data according to the bit field gap and the length of the placeholder data comprises:
in response to the bit field gap being a non-empty gap, determining, by the sending end, the length of the placeholder data corresponding to the non-empty gap as the target placeholder length of the semaphore corresponding to the bit field gap, wherein a type of the bit field gap comprises an empty gap and the non-empty gap, the empty gap indicates that the second bit field is consistent with the first bit field, and the length of the placeholder data corresponding to the empty gap is zero; and
determining, by the sending end, a placeholder position of the placeholder data in the bit field data structure and the bit field data structure containing the placeholder data according to the non-empty gap and the target placeholder length.

5. The method of claim 1, wherein packing, by the sending end, the plurality of semaphores based on the bit field data structure to obtain the target message comprises:
writing, by the sending end, values of the plurality of semaphores into variables corresponding to target semaphore identifiers to obtain target variables, and packing the target variables to obtain the target message, wherein the bit field data structure further comprises the target semaphore identifiers, and the target semaphore identifiers are consistent with signal identifiers of the plurality of semaphores.

6. The method of claim 5, after sending, by the sending end, the target message to the receiving end, further comprising:
after the receiving end receives the target message, unpacking, by the receiving end, the target message and obtaining values of the target variables from an unpacked result to control a vehicle driving state corresponding to the vehicle according to the values.

7. The method of any one of claims 1 to 6, wherein the bit field data structure is determined based on C or C++ programming language.

8. A vehicle-based communication apparatus, configured in a vehicle comprising a sending end and a receiving end of a message, wherein the apparatus comprises:
a message information determination module, belonging to the sending end and configured to determine message information containing a plurality of pieces of semaphore information, wherein a piece of semaphore information among the plurality of pieces of semaphore information comprises a start position of data of a respective semaphore, a signal identifier of the respective semaphore, and a data length of the respective semaphore, and the start position is determined based on a preset message data length;
a result determination module, belonging to the sending end and configured to determine a length of placeholder data of a semaphore among a plurality of semaphores and a bit field data structure containing the placeholder data according to the message information and the preset message data length, wherein the length of the placeholder data is determined according to the start position and the data length of the semaphore; and
a message sending module, belonging to the sending end and configured to pack the plurality of semaphores based on the bit field data structure to obtain a target message, and send the target message to the receiving end.

9. A vehicle, comprising:
at least one processor; and
a memory communicatively connected to the at least one processor; wherein,
the memory stores a computer program executable by the at least one processor, and the computer program, when being executed by the at least one processor, causes the at least one processor to perform the vehicle-based communication method of any one of claims 1 to 7.

10. A computer-readable storage medium storing a computer instruction, wherein when the computer instruction is executed by the processor, the computer instruction is configured to cause a processor to implement the vehicle-based communication method of any one of claims 1 to 7.
